Europäisches Patentamt

European Patent Office

Office européen des brevets

(11) Publication number: **0 114 561**
**B1**

(12) EUROPEAN PATENT SPECIFICATION

(45) Date of publication of patent specification: **26.11.86**

(51) Int. Cl.⁴: **F 16 H 1/32, F 16 H 25/06**

(21) Application number: **83630196.0**

(22) Date of filing: **01.12.83**

(54) Motion transmitting system.

(30) Priority: **27.12.82 US 453030**

(43) Date of publication of application:
**01.08.84 Bulletin 84/31**

(45) Publication of the grant of the patent:
**26.11.86 Bulletin 86/48**

(84) Designated Contracting States:
**BE CH DE FR GB LI NL**

(56) References cited:
**EP-A-0 037 287**
**DE-C- 856 086**
**FR-A-1 359 792**
**FR-A-1 507 031**
**US-A-4 023 440**

(73) Proprietor: **EMERSON ELECTRIC CO.**
**8100 W. Florissant Avenue**
**St. Louis Missouri 63136 (US)**

(72) Inventor: **Shrout, Norman**
**R.D. No. 1**
**Alpine New York 14805 (US)**
Inventor: **Groskopf, Roger Allen**
**R.D. No. 2 Box 2365**
**Seneca Falls New York 13148 (US)**

(74) Representative: **Weydert, Robert et al**
**Office Dennemeyer S.à.r.l. 21-25 Allée Scheffer**
**P.O. Box 41**
**L-2010 Luxembourg (LU)**

## Description

This invention relates to a motion transmitting device of the type described in the precharacterizing portion of claim 1.

A motion transmitting device of that type is known from FR—A—1 359 792. In the known device two 180° out of phase gears cooperate with a single fixed annular datum member. By the use of the two gears mounted on eccentrics essentially 180° out of phase, the motion transmitting device is substantially balanced without the use of counterweights required in a device having only one eccentric. The meshing elements are in the form of teeth integrally formed on the single datum member.

It is already known, see European patent application EP—A—0 037 287 to provide meshing pins carried in ovoid-shaped holes in two separate fixed annular datum members and cooperating with ovoid recesses formed in two gears mounted on a common eccentric portion of the input shaft, see figure 13 of European patent application EP—A—0 037 287. From that European patent application it is also known per se, see figures 16 and 20, to provide a fixed annular member with half ovoidal recesses in the inner surface thereof and to provide additional pin capturing plates having inwardly facing ledges for retaining the meshing pins in the half-ovoidal recesses.

The motion transmitting device of this patent application is characterized by the features claimed in the characterizing portion of new claim 1. In accordance with the invention, the tooth spaces between the teeth of the gears are semi-circular and also the single fixed annular datum member has semi-circular inwardly facing openings receiving the pin meshing elements therein. Part circular openings, instead of part- or half-ovoidal openings, are easily formed and do not require the precision manufacturing techniques required for forming the ovoid openings described in EP—A—0 037 287. The datum member can now be accurately manufactured on a gear cutting machine instead of a precision drilling apparatus. The motion transmitting device is compact in construction because the retaining plates engage opposite sides of the fixed annular datum member and terminate each in an inwardly directed annular axial flange on which the reaction pins rest, and because the two eccentrically mounted gears may both be arranged within the single annular datum member in a motion transmitting device having pins as meshing elements.

The motion transmitting device of this patent application has less frictional resistance and is therefore more efficient in operation. The system is of simplified construction and is made more compact than the known motion transmitting devices. Manufacturing costs are reduced.

The connecting means between the eccentrically mounted gears and one of the shafts comprises preferably coupling plugs connected to the shaft and extending through associated holes in the gears. Bushings are journaled on the coupling plugs and the diameter of each hole is essentially equal to the outside diameter of the bushing, plus twice the amount of eccentricity of the eccentrics.

The motion transmitting device will now be described in greater detail, with reference to the drawings, wherein:

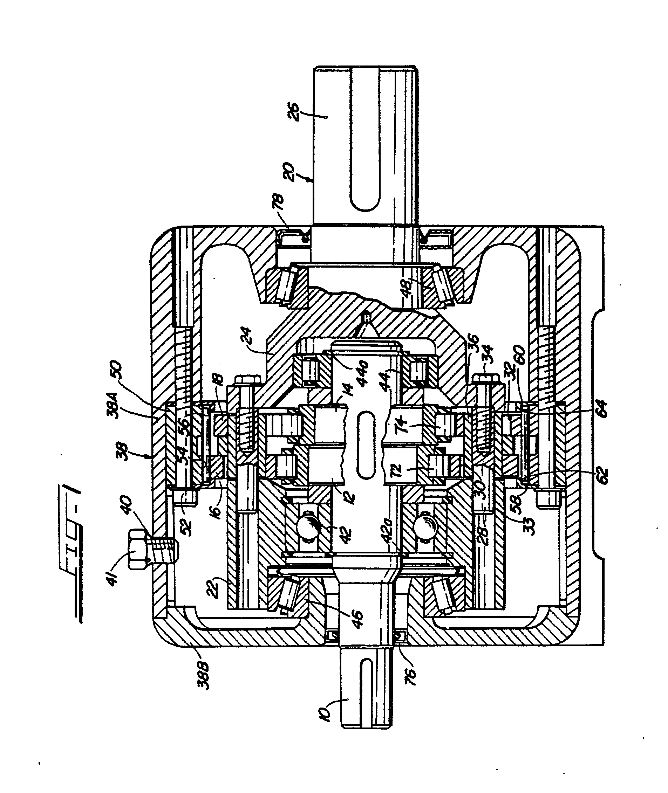

Fig. 1 is a longitudinal cross-section through a motion transmitting system according to this invention;

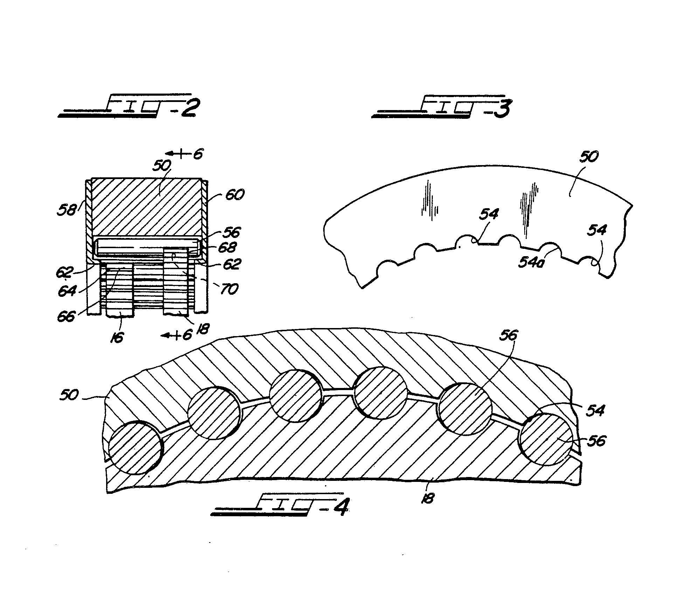

Fig. 2 is a partial cross-sectional view of the gears; drive pins and datum members according to the invention;

Fig. 3 is a partial side view of the datum members of Fig. 2; and

Fig. 4 is a partial side view of one of the gears of the motion transmitting system of Fig. 1 meshing with the drive pins and taken on line 6—6 of Fig. 2.

The general path of rotary motion transmission from input to output will first be described in connection with Fig. 1. The motion transmitting system of the invention includes a rotatable input member 10, on which a pair of eccentrics 12, 14 are fastened. Gears 16, 18 are mounted on eccentrics, 12, 14, so that the gears are eccentrically rotated as input member 10 is rotated. An output shaft assembly 20 includes two sections or subassemblies 22 and 24, and an output shaft extension 26. A plurality of coupling plugs 28 extend through holes 30, 32 of gears 16, 18, and into suitably bored openings 33 of sleeve section 22. Cup-like section 24 of the output shaft assembly is connected to section 22 by machine bolts 34 tapped into the plugs 28. The plugs 28 between the shaft sections 22 and 24 are surrounded by sleeves 36 which engage at least portions of holes 30, 32 in the gears. Accordingly, output shaft member 26 is rotated as input shaft 10 is driven, over the path including eccentrics 12, 14, gears 16, 18, coupling plugs 28, sections 22 and 24 of output shaft assembly 20 and output shaft 26 of the same assembly. With this summary of motion transmission, a detailed mechanical description and teaching of the speed modification through the system will now be set out.

In more detail, the motion transmitting device or drive system illustrated in the drawings comprises a housing 38 having a main cup-like portion 38A and an end cover 38B, the parts of which are connected in a suitable manner. The housing is provided with a base for fixing the device to a support and a tapped opening 40 into which oil or other suitable lubricant is introduced. The opening is closed by a threaded plug 41.

Input shaft 10 is journalled for rotation in spaced bearing assemblies 42 and 44, the bearing assemblies being supported in parts or sections 22 and 24 of output shaft assembly 20 which also includes output shaft member 26. Of the two parts, one is a sleeve-like part 22 and the other is a cup-like part 24; these parts or sections are rotatably joined as described heretofore. The bearing assembly 42 is suitably secured on input shaft 10 by a snap ring 42a. Bearing 42 comprises a conventional ball bearing assembly. The bearing assembly 44 is located on the shaft 10 by a snap ring 44a, and comprises a conventional roller bearing assembly. The subassemblies 22 and 24 which support the input shaft are journalled in bearing assemblies 46 and 48 supported in the housing 38. The bearing assemblies 46 and 48, because of the relationship of the input and output shafts, also support the input shaft. Each bearing assembly comprises a conventional roller bearing assembly. The assemblies 42, 44, 46, and 48 are shown as being of the ball and roller bearing varieties, it being understood that other types of bearings can be used if necessary or desirable. It is to be noted that input shaft and the output shaft assembly 20 are coaxial, concentric and, in the preferred embodiment, the output shaft assembly surrounds at least a part of the input shaft with in the housing.

A ring-like datum member or capturing plate 50 (see also Figs. 2 and 3) is held in the housing 38 by bolts 52. The datum member 50 is co-planar with the gears 16 and 18. The datum member 50 is provided with a plurality of evenly spaced motion limiting means in the form of semi-circular openings 54 and an independently movable drive pin or meshing element 56 is located in each opening. The openings 54 have a radius slightly larger than the radius of the pins 56. The pins 56 are retained against excessive axial movement as well as excessive inwardly directed radial movement by retainer plates or stops 58 and 60 located at the sides of the datum member 50. Each plate 58 and 60 has an inwardly directed flange 62 and 64 which limits or restricts the inwardly directed radial movement of the pins. The surface of each opening 54 limits or restricts the rolling motion of its pin 56. Thus, the datum member 50 can be considered as movement limiting means, as openings 54 and the retainer flanges 62 and 64 limit the motion of meshing elements 56 when the system operates. The system is designed to insure a rolling motion of each meshing element or pin 56 on the surface 54a of its respective opening 54.

Eccentrics 12 and 14 are keyed to the input shaft 10, and each is surrounded by a motion producing device, herein illustrated as gears or sprockets 16 and 18 located co-planar with the datum member 50. Gear 16 (Fig. 2) has teeth 64 separated by arcuate spaces 66 for engaging and subsequently disengaging drive pins 56 as the eccentrics 12 is rotated by the input shaft. Gear 18 (Figs. 2 and 4) is 180° out of phase with gear 16 and likewise has teeth 68 separated by arcuate spaces 70 for engaging and subsequently disengaging drive pins 56 as the eccentric 14 is rotated by the input shaft 10. The use of two gears 180° out of phase with one another eliminates the need for a counterweight which is required when a single gear is used. The torque capacity of the assembly is also increased over a single gear assembly. The gears 16 and 18 are identical except for their being out of phase with one another. The gear spaces 66 and 70 are each defined by semi-circular surfaces. Fig. 4 shows a portion of gear 18 and some of the gear spaces 70. Gear 16 is identical to gear 18, and is thus not illustrated. The combination of semi-circular openings 54, round pins 56 and semi-circular surfaced spaces 66 and 70 on the meshing gears insure pure rolling motion of the pins 56 in the openings 54. As each gear engages the drive pins, the gear also rotates about its axis which is eccentric to the axis of the input shaft.

The number of drive pins 56 is at least one more than the number of teeth of each gear which causes the gears to rotate at a speed which is less than that of input shaft, the speed ratio being expressed as

$$\frac{n}{N-n}$$

where n equals the number of gear teeth and N equals the number of drive pins.

Roller bearing assemblies 72 and 74 of conventional construction are located between the eccentric 12 and 14 and the gear 16 and 18.

The centers of holes 30 and 36 through which the coupling sleeves 36 pass are each on a circle which is concentric with respect to its respective gear 16 and 18.

The ends of housing 38 can be dirt sealed by suitable sealing means identified at 76 and 78. The dirt seals are conventional in construction, it being understood that other known types of dirt seals can be used if so desired. The dirt seals also function to retain lubricant in the housing.

In the event that the device is to be used as a speed increaser instead of a speed reducer, shaft 10 would be connected as the output shaft, and output assembly 20 connected as the input shaft.

Sections 22 and 24 of output shaft assembly 20 are supported by bearings 46 and 48 at locations which are spaced from each other. The support for output shaft assembly 20 is accomplished because of the connecting plugs 28 which connect the sections 22 and 24 of the output shaft assembly 20. Plugs 28 pass through holes 30 and 32 in gears 16 and 18 without interfering with the functions of the gears. By spacing the bearings supporting the output shaft assembly as shown, the load on the bearings is generally evenly distributed. The bearings also take any thrust loads on the shafts.

The drive pins 56 roll around the openings 54 when engaged by the gears. This rolling motion minimizes friction losses as contrasted to the use of prior art ovoid holes, in which sliding motion occurs. The semi-circular openings 54 in the capturing plate 50 and semi-circular teeth spaces 66 and 70 in the gears 16 and 18 are relatively simple to form, requiring no complex geometry. They can be cut on shaping machines.

With the structure of this invention a single datum member co-planar with the gears is used. An additional plus resides in the difference in manufacturing the capturing plates or datum members as a plurality of semi-circular openings is required in a single member only.

As input shaft 10 is rotated, eccentrics 12 and 14 are turned and the gears or sprockets 16 and 18 are forced to roll around while engaging drive pins 56, *resulting in a slow speed rotation about their axis,* as well as a high speed gyration around the shaft 10. The orbital motion of the gears is converted to rotary motion of output shaft assembly 20 by coupling plugs 28 extending through holes 30 and 32. The coupling plugs 28 transmit torque from gears 16 and 18 to the output shaft assembly 20. Bushings 36 are journalled on plugs 28. The diameter of each hole 30 and 32 is essentially equal to the outside diameter of the bushing 36, plus twice the amount of eccentricity of the eccentrics 12 and 14. The bushings 36 roll around the holes 30 and 32 as the gears gyrate. In this way, the rotation of the gears is transferred to the output shaft subassemblies while the gyration of the gears is not so transferred.

When used in the foregoing specification and the appended claims, the terms "semi-circular" and "round" means that every point on the perimeter of the object or figure is equidistant from a fixed point at its center. The term "ovoid" means eggshaped or oval, and especially a shape in which the basal end is broader than the other end.

## Claims

1. Motion transmitting device comprising:
concentric input and output shafts (10, 20),
a pair of eccentrics (12, 14) connected to one (10) of said shafts (10, 20) and rotatable therewith, said eccentrics (12, 14) being 180 degrees out of phase with one another,
a pair of gears (16, 18) each of which is freely rotatable on one of said eccentrics (12, 14), and each having a plurality of teeth (64, 68) with tooth spaces therebetween,
a single fixed annular datum member (50) having a plurality of substantially equally spaced meshing elements at the inner surface thereof for engagement by the sprocket teeth (64, 68), each said meshing element being substantially equidistant from the axis of rotation of said shafts (10, 20), and the number of said meshing elements exceeding by at least one the number of gear teeth (64, 68), the eccentric rotation of said gears (16, 18) permitting some of the gear teeth (64, 68) to engage a like number of meshing elements to impart rotary motion to the gears (16, 18) about the eccentrics (16, 18), and
means connecting said gears (16, 18) and the other (20) of said shafts (10, 20) to translate the rotary motion of said gears (16, 18) about their eccentrics (12, 14) to rotary motion of said other shaft (20),
characterized in that the gear tooth spaces (66, 70) are semi-circular, that the fixed annular datum member (50) has a plurality of inwardly facing semi-circular openings (54), that the meshing elements comprise a plurality of generally cylindrical pins (56), each of which is held captive by retaining means in one of the semi-circular openings (54) of the fixed datum member (50) for engagement by the gear teeth (64, 68), each pin (56) having a radius less than the radius of said *semi-circular openings (54) to permit rolling of* the pin (56) around inside an opening (54) when engaged by a gear tooth (64), and that the retaining means comprises a pair of annular members (58, 60) engaging opposite sides of the fixed datum member (50) and connected thereto, each annular member (58, 60) terminating in an inwardly directed annular axial flange (62) on which the cylindrical pins (56) rest.

2. Motion transmitting device according to claim 1, characterized in that the connecting means between said other shaft (20) and the eccentrically mounted gears (16, 18) comprise coupling plugs (28) connected to the shaft (20) and extending through circular holes (30, 32) in the gears, and bushings (36) surrounding the coupling plugs (28), the diameter of the circular holes (30, 32) being essentially equal to the outside diameter of the bushings (28) plus twice the amount of eccentricity of the eccentrics (12, 14).

3. Motion transmitting device according to claim 2, characterized in that said other shaft (20) comprises a first and a second section (22, 24), the coupling plugs (28) being connected to one (24) of the sections (22, 24) and received in bores (33) of the other section (22).

4. Motion transmitting device according to claim 3, characterized in that said one shaft section (24) is cup-shaped and said other shaft section (22) is sleeve-shaped, said one shaft (10) being rotatably journaled in the cup-shaped and sleeve-shaped sections (24, 22) of the other shaft (20).

5. Motion transmitting device according to any one of claims 1 to 4, characterized in that the single fixed annular datum member (50) and the annular retaining members (58, 60) are fixed by bolt means (52) to a housing (38) of the motion transmitting device.

## Patentansprüche

1.   Bewungsübertragungsvorrichtung   mit: konzentrischen Eingangs- und Ausgangswellen (10, 20), einem Paar Exzentern (12, 14), die mit einer (10) der Wellen (10, 20) verbunden und mit ihr drehbar sind, wobei die Exzenter (12, 14) gegeneinander um 180° phasenverschoben sind, einem Paar Zahnrädern (16, 18), von denen jedes auf einem der Exzenter (12, 14) frei drehbar ist und jedes mehrere Zähne (64, 68) mit Zahnlücken dazwischen hat, einem einzelnen, feststehenden, ringförmigen Bezugsteil (50), das mehrere im wesentlichen gleichabständige Eingriffselemente an seiner inneren Oberfläche zur Erfassung durch die Zähne (64, 68) hat, wobei jedes Eingriffselement im wesentlichen äquidistant von der Drehachse der Wellen (10, 20) ist und die Zahl der Eingriffselemente die Zahl der Zähne (64, 68) um wenigstens eins übersteigt, wobei die exzentrische Drehung der Zahnräder (16, 18) einigen der Zähne (64, 68) gestattet, eine gleiche Anzahl von Eingriffselementen zu erfassen, um die Zahnräder (16, 18) um die Exzenter (16, 18) in Drehung zu versetzen, und einer Einrichtung, die die Zahnräder (16, 18) und die andere (20) der Wellen (10, 20) miteinander verbindet, um die Drehbewegung der Zahnräder (16, 18) um deren Exzenter (12, 14) in eine Drehbewegung der anderen Welle (20) umzusetzen, dadurch gekennzeichnet, daß die Zahnlücken (66, 70) halbkreisförmig sind, daß das feststehende, ringförmige Bezugsteil (50) mehrere nach innen weisende halbkreisförmige Öffnungen (54) hat, daß die Eingriffselemente mehrere insgesamt zylindrische Stifte (56) aufweisen, von denen jeder durch eine Halteeinrichtung in einer der halbkreisförmigen Öffnungen (54) des feststehenden Bezugsteils (50) zur Erfassung durch die Zähne (64, 68) festgehalten ist, wobei jeder Stift (56) einen Radius hat, der kleiner als der Radius der halbkreisförmigen Öffnungen (54) ist, um das Rollen des Stiftes (56) um die Innenseite einer Öffnung (54) zu gestatten, wenn er durch einen Zahn (64) erfaßt ist, und daß die Halteeinrichtung ein paar ringförmige Teile (58, 60) aufweist, die entgegengesetzte Seiten des feststehenden Bezugsteils (50) erfassen und mit diesen verbunden sind, wobei jedes ringförmige Teil (58, 60) in einem nach innen gerichteten, ringförmigen, axialen Flansch (62) endigt, auf dem die zylindrischen Stifte (56) ruhen.

2. Bewegungsübertragungsvorrichtung nach Anspruch 1, dadurch gekennzeichnet, daß die Verbindungseinrichtung zwischen der anderen Welle (20) und den exzentrisch befestigten Zahnrädern (16, 18) Kupplungszapfen (28) aufweist, die mit der Welle (20) verbunden sind und sich durch kreisförmige Löcher (30, 32) in den Zahnrädern erstrecken, sowie Büchsen (36), die die Kupplungszapfen (28) umgeben, wobei der Durchmesser der kreisförmigen Löcher (30, 32) im wesentlichen gleich dem Außendurchmesser der Büchsen (28) plus dem Zweifachen der Größe der Exzentrizität der Exzenter (12, 14) ist.

3. Bewegungsübertragungsvorrichtung nach Anspruch 2, dadurch gekennzeichnet, daß die andere Welle (20) einen ersten und einen zweiten Abschnitt (22, 24) aufweist, wobei die Kupplungszapfen (28) mit einem (24) der Abschnitte (22, 24) verbunden und in Bohrungen (33) des anderen Abschnitts (22) aufgenommen sind.

4. Bewegungsübertragungsvorrichtung nach Anspruch 3, dadurch gekennzeichnet, daß ein Wellenabschnitt (24) becherförmig ist und daß der andere Wellenabschnitt (22) buchsenförmig ist, wobei die eine Welle (10) in dem becherförmigen und in dem buchsenförmigen Abschnitt (24, 22) der anderen Welle (20) drehbar gelagert ist.

5. Bewegungsübertragungsvorrichtung nach einem der Ansprüche 1 bis 4, dadurch gekennzeichnet, daß das einzelne, feststehende, ringförmige Bezugsteil (50) und die ringförmigen Halteteile (58, 60) mittels Schrauben (52) an einem Gehäuse (38) der Bewegungsübertragungsvorrichtung befestigt sind.

**Revendications**

1. Dispositif de transmission de mouvement comprenant des arbres d'entré et de sortie (10, 20) concentriques, une paire d'excentriques (12, 14) raccordés à l'un (10) der ces arbres (10, 20) et tournant avec celui-ci, ces excentriques (12, 14) étant décalés de 180° l'un par rapport à l'autre, une paire de roues d'engrenage (16, 18) dont chacune peut tourner librement sur l'un des excentriques (12, 14) et comporte plusieurs dents (64, 68) séparées par des entredents, un unique organe de référence annulaire fixe (50) comportant, sur sa surface interne, plusieurs éléments d'engrènement espacés de manière sensiblement égale, destinés à engrener avec les dents (64, 68) des pignons, chacun de ces éléments d'engrènement étant sensiblement équidistant de l'axe de rotation des arbres (10, 20) et le nombre de ces éléments d'engrènement étant supérieur de un au moins au nombre des dents (64, 68) des roues d'engrenage, la rotation excentrique de ces roues (16, 18) permettant à quelques-unes des dents (64, 68) des roues d'entrer en prise avec un nombre égal d'éléments d'engrènement pour communiquer un mouvement de rotation aux roues d'engrenage (16, 18) autour des excentriques (16, 18), et des moyens reliant les roues d'engrenage (16, 18) et l'autre (20) des arbres (10, 20) pour transmettre le mouvement rotatif des roues d'engrenage (16, 18) autour de leurs excentriques (12, 14) sous forme de mouvement rotatif dudit autre arbre (20), caractérisé en ce que les entredents (66, 70) des roues d'engrenage sont demi-circulaires, en ce que l'organe de rférence annulaire fixe (50) comporte plusieurs ouvertures demi-circulaires (54) dirigées vers l'intérieur, en ce que les éléments d'engrènement sont constitués par plusieurs broches généralement cylindriques (56), dont chacune est maintenue captive par des moyens de retenue dans l'une des ouvertures demi-circulaires (54) de l'organe de référence fixe (50) pour entrer en prise avec les dents (64, 68) des roues d'engrenage, chaque broche (56) ayant un rayon inférieur au rayon des ouvertures demi-circulaires (54) afin de permettre le roulement de la broche (56) à l'intérieur d'une ouverture (54) lorsqu'elle est attaquée par une dent (64) de roue d'engrenage, et en ce que les moyens de retenue sont constitués par une paire d'organes annulaires (58, 60) appliqués contre les côtés opposés de l'organe de référence fixe (50) et fixés à celui-ci, chacun de ces organes annulaires (58, 60) se terminant par un rebord axial annulaire dirigé vers l'intérieur (62), sur lequel reposent les broches cylindriques (56).

2. Dispositif de transmission de mouvement selon la revendication 1, caractérisé en ce que les moyens de liaison entre ledit autre arbre (20) et les roues d'engrenage montées excentriquement (16, 18) comprennent des chevilles d'accouplement (28) raccordées à l'arbre (20) et s'étendant à travers des trous circulaires (30, 32) dans les roues d'engrenage, et des douilles (36) entourant les chevilles d'accouplement (28), le diamètre des trous circulaires (30, 32) étant sensiblement égal au diamètre extérieur des douilles (28), plus le double de l'excentricité des excentriques (12, 14).

3. Dispositif de transmission de mouvement selon la revendication 2, caractérisé en ce que ledit autre arbre (20) comprend une première et une seconde sections (22, 24), les chevilles d'accouplement (28) étant raccordées à l'une (24) des sections (22, 24) et reçues dans des forures (33) de l'autre section (22).

4. Dispositif de transmission de mouvement selon la revendication 3, caractérisé en ce que ladite section (24) de l'arbre est en forme de cuvette et l'autre section (22) de l'arbre est en forme de manchon, ledit arbre (10) étant monté à rotation dans les sections en forme de cuvette et en forme de manchon (24, 22) de l'autre arbre (20).

5. Dispositif de transmission de mouvement selon l'une quelconque des revendications 1 à 4, caractérisé en ce que l'unique organe de référence annulaire fixe (50) et les organes annulaires de retenue (58, 60) sont fixés par des boulons (52) à un carter (38) du dispositif de transmission de mouvement.

FIG-1

0 114 561

FIG-2

FIG-3

FIG-4

2